# EUROPEAN PATENT SPECIFICATION

(11) **EP 4 010 420 B1**
(45) Date of publication and mention of the grant of the patent: **09.07.2025**
(21) Application number: 20751093.4
(22) Date of filing: 28.07.2020
(51) Int. Cl.: C08K 9/02, C08K 9/04, C08K 9/06, C08K 9/08, C08L 23/12, C08K 3/22, C08K 3/24

(54) **MATERIALS AND METHODS**
MATERIALEN UND METHODEN
MATERIAUX ET MÉTHODES

(30) Priority: 05.08.2019 GB 201911133
(43) Date of publication of application: 15.06.2022
(73) Proprietor: QinetiQ Limited, Farnborough, Hampshire GU14 0LX (GB)
(72) Inventor: NEWTON, Emma Jane, Farnborough Hampshire GU14 0LX (GB); LAING, Louisa Alice, Farnborough Hampshire GU14 0LX (GB); SPOONER, Christopher Douglas James, Farnborough Hampshire GU14 0LX (GB)
(74) Representative: QINETIQ IP
(86) International application number: PCT/EP2020/071184
(87) International publication number: WO 2021/023560

(56) References cited:
- EP-A1- 2 455 339
- WO-A1-2015/023001
- WO-A1-2018/230195
- CN-A- 108 546 415
- US-A- 4 891 399
- US-A1- 2011 249 374
- US-A1- 2012 141 780
- US-A1- 2013 172 444
- US-A1- 2015 069 290
- US-A1- 2015 380 636
- US-A1- 2016 155 532
- US-A1- 2016 369 100
- US-A1- 2019 136 054
- NASSER SABER ET AL: "Effect of surface modification of lead zirconate titanate particles on the properties of piezoelectric composite sensors", SPIE - INTERNATIONAL SOCIETY FOR OPTICAL ENGINEERING. PROCEEDINGS, vol. 8793, 9 August 2013 (2013-08-09), US, pages 879309, XP055726341, ISSN: 0277-786X, ISBN: 978-1-5106-3549-4, DOI: 10.1117/12.2025131
- KONG L B ET AL: "Electrically tunable dielectric materials and strategies to improve their performances", PROGRESS IN MATERIALS SCIENCE, PERGAMON PRESS, GB, vol. 55, no. 8, 1 November 2010 (2010-11-01), pages 840 - 893, XP027113483, ISSN: 0079-6425, [retrieved on 20100630]
- WEI SHUNHANG ET AL: "Boosting photocatalytic water oxidation reactions over strontium tantalum oxynitride by structural laminations", APPLIED CATALYSIS B: ENVIRONMENTAL, ELSEVIER, AMSTERDAM, NL, vol. 228, 31 January 2018 (2018-01-31), pages 10 - 18, XP085348445, ISSN: 0926-3373, DOI: 10.1016/J.APCATB.2018.01.071

## Description

### Field of the Invention

The present invention relates to filled polymer compositions and methods of making said filled polymer compositions and shaped articles or products comprising or formed from said polymer compositions. The filled polymer compositions may be used in a range of applications requiring materials with desired material properties including high dielectric properties or high permittivity properties. The present invention also relates to the use of the compositions in a range of applications and/or devices and associated methods of making.

### Background of the invention

It is known to incorporate filler material with polymers. However, incorporating high levels of filler materials into polymer compositions and retaining desirable properties of the polymer remains a challenge. Various polymer compositions are described in US2013/172444, US2015/069290, XP055726341, CN 108546415, US4891399, US2019/136054, US2015/380636, US2016/155532, EP2455339, US2016/369100, WO2018/230195, and US2012/141780.

One application in which filled polymers are used is in so called Radio Frequency (RF) products. RF products are generally taken to mean devices or products which operate in the radio wave region of the electromagnetic spectrum, with wavelengths longer than infrared light. They have frequencies from about 3 KHz to 300 GHz, and corresponding wavelengths from about 100 km to about 1 mm. More recently the terahertz frequency domain is being used. Terahertz is typically defined as the frequency range of 100 GHz to 30 terahertz with corresponding wavelength of 3mm to 0.01mm. Particular types of RF products, for example lenses, may also operate within this range of the spectrum. Examples of RF products include multilayer products such as radomes, RF lenses (e.g. a Luneburg lens), retro-reflectors, RF waveguides, RF filters, RF resonators, metamaterial structures, refraction structures, diffraction structures, or scattering structures.

It is known to make multilayer RF products such as lenses, waveguides, retro-reflectors and resonators. Other technical products which may use multilayer functional components are sensors, actuators, motors, valves, and pharmaceutical products such as implants, prosthetics, applicators, medicine dispensers and the like.

Certain applications may require the various layers (or parts) forming the products, e.g. lenses, to possess different material properties. For example, being able to control the material permittivity versus position in the volume of the article would be desirable for many **RF** products. The product or article may therefore comprise a number of layers (or parts) of varying chemical constitution and/or shape which typically may be made separately.

Polymers may be filled with filler materials (particulate or fibrous) in order to tailor the properties of the polymer or simply in an attempt to use filler material in order to save on the use of polymer which tends to be more expensive than filler material. In these circumstances, it is desirable if the filled polymer exhibits at least broadly comparable properties to the unfilled polymer and preferably improved properties.

In order to use filled polymers in certain applications it is required to make very precise shapes and sizes and therefore it is desirable if the filled polymer is easy to work with and may be used in existing techniques (preferably which are economically viable) for preparing shaped articles comprising filled polymers.

Further, there is a need to be able to make materials or products with certain properties, including those discussed above, using cost effective techniques which allow for high throughput. Examples of such products include the afore-mentioned RF products, shaped products in general, multilayer products, lens structures and the like. Injection moulding is an example of a relatively low cost scalable technique for making the various parts of a product, including products for which the requirements are quite stringent.

Providing a filled polymer possessing certain properties, for example, a high dielectric constant (dk) or permittivity, (or more specifically the relative real permittivity), while at the same time retaining good rheology properties such as viscosity has hitherto proven difficult. The present inventors have found that some of the afore-mentioned problems may be addressed by the combination of surface treated filler material (e.g. a coated filler material), and, optionally, other additives such as lubricants when used in polymer compositions.

### Summary of the Invention

It is an object of the present invention to overcome at least some of the afore-mentioned problems and, *inter alia,* to provide filled polymer compositions which are suitable for use in a wide range of applications including in multilayer lens structures. In addition, the present inventors have identified that it would be desirable to provide a range of materials that are able to operate across a broad temperature range, e.g. about -60 °C to about +90 °C (or more specifically about -55 °C to about +80 °C) without a significant deviation occurring with other material properties such as the dielectric constant or permittivity (e.g. the relative real permittivity). In addition, said materials should preferably be resistant to the vibration and shock resulting from changes in the pressure exerted on said materials.

As such and in a first aspect there is provided a polymer composition as claimed in claim 1.

In a second aspect there is provided a method of making the polymer composition as claimed in claim 13.

In a third aspect there is provided a shaped article (or product) as claimed in claim 14.

In a fourth aspect that does not fall within the scope of the claims, there is provided a method of making a shaped article (or product) in accordance with the third aspect of the present invention comprising a polymer composition in accordance with the first aspect of the present invention wherein the method comprises the step of shaping said polymer composition to form said shaped article.

Any specific and/or preferred features referred to herein are applicable to all of the aspects of the present invention.

In the various aspects of the invention, the filler material may comprise, or consist of, or consist essentially of a surface treated metal oxide. There may be present just one surface treated metal oxide or more than one surface treated metal oxide. When more than one surface treated metal oxide is present they may be present in a mixture or in a composite structure. An example of a mixture of metal oxides suitable for use in accordance with the present invention is a mixture comprising of or consisting of barium oxide, tantalum oxide, and titanium dioxide, e.g., 5BaO-Ta₂O₅-3TiO₂. Such an oxide may be referred to herein as a mixed metal oxide.

For a given surface treated metal oxide, more than one metal may be present. An example of such a metal oxide suitable for use in the present invention is strontium titanate (SrTiO₃). Alternatively, the metal oxide may comprise a single metal. An example of metal oxide comprising a single metal for use in the present invention is titanium dioxide (TiO₂).

In the various aspects of the invention, the surface treated metal oxide may be a coated metal oxide. As such, there is provided a polymer composition comprising a polymer, a filler material and optionally a lubricant, wherein the filler material comprises a coated metal oxide. The surface of the metal oxide may be partially or completely coated. The metal oxide may be coated or treated with one or more coating agents.

The shaped article made in accordance with the present invention may be formed in a moulding technique, for example an injection moulding technique. The shaped article may be made from one part, or more than one part, one layer or more than one layer. The shaped article may be multi-layered. The boundaries between at least two layers in a shaped article may be diffuse or not distinct in so far as the layers may diffuse into each other. These boundary layers may be referred to herein as diffuse layer boundaries. The use of diffuse layer boundaries may be used in providing graded structures. The shaped article may be used in connection with a range of applications.

The polymer is is high density polyethylene (HDPE).

The polyethylene is high density polyethylene (HDPE). In other arrangements not claimed, the polyethylene may be selected from low density polyethylene (LDPE) or linear low density polyethylene (LLDPE). LDPE typically possesses a density of 0.910-0.925 g/cm³. LLDPE differs structurally from LDPE due to the absence of long chain branching. HDPE has extremely low levels of chain branching allowing it to solidify with high levels of crystallinity and it typically possesses a density of 0.941-0.965 g/cm³. A typical mean molecular weight for LDPE is < 200,000 g/mol. A typical mean molecular weight for HDPE is < 50,000. HDPE is particularly preferred for use in the present invention. HDPE may be crosslinked to form crosslinked HDPE. Crosslinking the polymer results in the operational temperature range being broadened.

Melt flow rates of at least about 100 g per 10 min, or at least about 200 g per 10 min are preferred, however lower flow rates are also suitable such as at least 20 g per 10 min, for example in connection with the use of HDPE.

The filler material may be a particulate filler material. The filler material comprises, consists of, or consists essentially of a surface treated (e.g. coated) metal oxide. The metal oxide may comprise one or more of the following metals: lithium, sodium, magnesium, calcium, titanium, vanadium, iron, nickel, copper, zinc, gallium, strontium, zirconium, niobium, molybdenum, palladium, silver, barium, tantalum, tungsten, lead, bismuth, lanthanum, cerium, praseodymium, neodymium, samarium, dysprosium, thulium, yttrium, manganese, germanium, aluminium, chromium, cobalt. Optionally, and in addition to the presence of surface treated metal oxide, the filler material may comprise metal oxide wherein the surface thereof has not been treated.

The metal oxide may comprise two or more of the following metals: lithium, sodium, magnesium, calcium, titanium, vanadium, iron, nickel, copper, zinc, gallium, strontium, zirconium, niobium, molybdenum, palladium, silver, barium, tantalum, tungsten, lead, bismuth, lanthanum, cerium, praseodymium, neodymium, samarium, dysprosium, thulium, yttrium, manganese, germanium, aluminium, chromium, cobalt.

Hence, the surface treated (e.g. coated) metal oxide may comprise, or consist of, or consist essentially of one or more of lithium oxide, sodium oxide, magnesium oxide, calcium oxide, titanium dioxide, vanadium oxide, iron oxide, nickel oxide, copper oxide, zinc oxide, gallium oxide, strontium oxide, zirconium dioxide, niobium oxide, molybdenum trioxide, palladium oxide, silver oxide, barium oxide, tantalum oxide, tungsten oxide, lead oxide, bismuth oxide, lanthanum oxide, cerium oxide, praseodymium oxide, neodymium oxide, samarium oxide, dysprosium oxide, thulium oxide, yttrium oxide, manganese oxide, germanium oxide, aluminium oxide, chromium oxide, cobalt oxide.

Examples of metal oxides for use in accordance with the present invention include analogues of the above mentioned metals. Examples of other metal oxides suitable for use in accordance with the present invention, which may also be referred to herein as analogue metal oxides, include metal titanate, metal zirconate, metal niobate, metal tantalate, metal oxynitride.

The filler material may comprise, consist of, or consist essentially of any one or more of the following materials which are surface treated, (e.g. coated): bismuth titanate, barium titanate, strontium titanate, cerium titanate, lanthanum titanate, samarium titanate, tantalum titanate, lead titanate, zirconium titanate, calcium titanate, niobium titanate, Other examples of titanates include one or more of barium strontium titanate, calcium copper titanate (e.g. CaCu₃Ti₄O₁₂).

The filler material may comprise, consist of, or consist essentially of any of magnesium titanate, calcium titanate, strontium titanate or titanium dioxide. The filler material may comprise, consist of, or consist essentially of any combination of magnesium titanate, calcium titanate, strontium titanate and titanium dioxide. Strontium titanate and titanium dioxide are preferred with titanium dioxide being particularly preferred, especially the rutile crystal structure of titanium dioxide. Preferably, the titanium dioxide comprises, consists of, or consists essentially of the rutile crystal structure.

The surface treated (e.g. coated) metal oxide may be selected from surface treated (e.g. coated) titanium dioxide only. The surface treated (e.g. coated) metal oxide may be selected from surface treated (e.g. coated) strontium titanate only. More generally, the surface treated (e.g. coated) metal oxide may be selected from only any one of the surface treated (e.g. coated) metal oxides mentioned herein for use in connection with the present invention.

Suitable examples of niobates include barium niobate (e.g. Ba₅Nb₄O₁₅), bismuth zinc niobate (e.g. Bi _{1.5}Zn_{0.92}Nb_{1.5}O_{6.92}), barium titanium gallium niobate (e.g. BaTi_{0.7}Ga_{0.15}Nb_{0.15}O₃), silver tantalum niobate (e.g. AgTa_{0.57}Nb_{0.43}O₃).

Suitable examples of zirconates include calcium zirconate (e.g. Ca₂ZrO₄), lead zirconate, lead calcium zirconate (e.g. Pb_{0.7}Ca_{0.3}ZrO₃).

Suitable examples of metal tantalate include barium lanthanum titanium tantalate (e.g. Ba₃La₃Ti₅Ta₆O₃₀), silver tantalate (Ag_{0.52}Ta_{0.48}O₃).

Suitable examples of metal oxynitrides include strontium tantalum oxynitride (SrTaO₂N).

The filler material may comprise, or consist of, or consist essentially of one or more of surface treated (e.g. coated) s-block metal oxides, surface treated (e.g. coated) d-block metal oxides, or surface treated (e.g. coated) p-block metal oxides.

The filler material may comprise, or consist of, or consist essentially of one or more of: surface treated (e.g. coated) alkali metal oxides, surface treated (e.g. coated) alkaline earth metal oxides, surface treated (e.g. coated) d-block transition metal oxides, surface treated (e.g. coated) lanthanide oxides, surface treated (e.g. coated) p-block group 13 metal oxides, surface treated (e.g. coated) p-block 14 metal oxides and surface treated (e.g. coated) p-block 15 metal oxides. Other examples of metal oxides include one or more of the following: perovskite type oxides, pseudo tungsten bronze structures. Hence, the filler material may comprise, or consist of, or consist essentially of one or more of surface treated (e.g. coated) perovskite type oxides, surface treated (e.g. coated) pseudo tungsten bronze structures.

Relative to the total dry volume of the filled polymer, the filler material may be present in an amount of at least about 5 vol%, or at least about 10 vol%, or at least about 15 vol%, or at least about 20 vol%, or at least about 30 vol%, or at least about 40 vol%, or at least about 50 vol%, or at least about 60 vol% or at least about 65 vol% or at least about 70 vol%. The filler material may be present up to about 75 vol%, or up to about 70 vol %. Relative to the total dry volume of the filled polymer, the filler material may be present in an amount of at least about 15 vol% to about 75 vol%, or at least about 20 vol% to about 75vol%, or at least about 30 vol% to about 75 vol%, or at least about 40 vol% to about 75 vol%, or at least about 45 vol% to about 75 vol%, at least about 50 vol% to about 75 vol% or at least about 60 vol% to about 75 vol%. The upper limit for all of these ranges may be up to about 75 vol % or up to about 70 vol %. The amount of filler material present in the polymer is measured based on the total volume of the dry components of the filled polymer. With respect to the relative amounts present, reference to the filler material may include reference to the surface treated (e.g. coated) metal oxide.

The metal oxide may be surface treated with a coating agent or a surface treatment agent. The coating or surface treatment agent may be present in an amount of about 0.5 wt% to about 10 wt%, preferably about 0.7 wt% to about 5 wt%, most preferably about 0.9 wt% to about 2 wt% based on the coated weight of the coated metal oxide. The metal oxide may be surface treated over some or all of its surface. The metal oxide may be partially coated or completely coated. When the metal oxide is partially coated or partially treated there may be one or more distinct areas of the surface of the metal oxide which remain uncoated or untreated.

The metal oxide may be surface treated or coated with a coupling agent or a dispersant. The metal oxide may be surface treated or coated with any one or more of; a silane (for example an organosilane), a metal salt, an aluminate (for example, a zircoaluminate), a titanate (for example a zirconate titanate), an unsaturated acid, an acid functionalised polymer. Suitable commercially available coupling agents and/or dispersants (i.e. adhesion promoters) may be obtained from Chartwell International Inc. A suitable example of such a commercially available material is a zirconate titanate. The coating agent or surface treatment agent may be a silane, (for example an organosilane), a metal salt, an aluminate (for example, a zircoaluminate), a titanate, an unsaturated acid, an acid functionalised polymer. The coating agent or surface treatment agent may comprise, may consist of, or may consist essentially of a silane, (for example an organosilane), a metal salt, an aluminate (for example, a zircoaluminate), a titanate (for example a zirconate titanate), an unsaturated acid, an acid functionalised polymer. The metal oxide may be partially coated or partially surface treated with a silane or the metal oxide may be completely coated or completely surface treated with a silane. The metal oxide may be partially coated or partially surface treated with a metal salt, an aluminate (for example, a zircoaluminate), a titanate, an unsaturated acid, an acid functionalised polymer. The metal oxide may be completely coated or completely surface treated with a metal salt, an aluminate (for example, a zircoaluminate), a titanate (for example a zirconate titanate), an unsaturated acid, an acid functionalised polymer.

The filler material or the metal oxide may be present in the form of particles in one or more of a range of shapes, for example, plate shaped particles, spherical particles, irregular shaped particles, flakes. Preferably, the filler material or the metal oxide is of a high purity grade, for example greater than about 95 wt% pure, or greater than about 96 wt% pure, or greater than about 97 wt% pure, or greater than about 98 wt% pure. The filler material or metal oxide may possess a particle size ranging from about 1 nm, or from about 0.1 µm, or from about 0.5 µm, or from about 1 µm to about 200 µm. The filler material or metal oxide may possess a particle size ranging from about 1nm to about 0.1 µm, or from about 1nm to about 0.5 µm, or from about 1nm to about 1 µm. The filler material or metal oxide may possess a particle size ranging from about 0.1 µm to about 0.5 µm, or from about 0.1 µm to about 1 µm, or from about 0.1 µm to about 200 µm. The filler material or metal oxide may be present in multimodal form, for example bimodal form.

Unless otherwise stated, particle size properties referred to herein for the filler material or metal oxide are as measured in a well-known manner by laser diffraction of the filler material or metal oxide in a fully dispersed condition in an aqueous medium using a Mastersizer 3000 machine as supplied by Malvern Panalytical (telephone: +44 (0) 1684 892456; web-site:https://www.malvernpanalytical.com/en), referred to herein as a "Mastersizer 3000 unit". Following Mie theory of light scattering, such a machine provides measurements and a plot of particles in a given size range based on a volume equivalent sphere diameter (e.s.d) by percent of the total sample volume density of the sample measured. From this a cumulative volume curve is estimated for the total volume of all size ranges to 100% from which the mean particle size, d_{50,} is determined as 50% of the particles in the sample having an equivalent spherical diameter less than that d₅₀ value. The d₁₀ and the d₉₀ are the values determined in this way of the particle e.s.d. at which there are 10% and 90% respectively of the particles in the sample which have an equivalent spherical diameter less than that d₁₀ or d₉₀ value.

Advantageously, the polymer compositions in accordance with the present invention may provide one or more of the following in any combination: a dielectric constant of at least about 16, a loss tangent of no more than about 0.005 (preferably at GHz frequencies), a viscosity of less than about 30,000 Pa.s at a shear rate of about 0.6-1.0 s⁻¹ or about 0.6-0.8 s⁻¹. The polymer compositions in accordance with the present invention are also advantageous because the filler material is evenly distributed throughout the polymer. The reproducibility of processed parts is improved by well distributed filler content. Further, a highly flowable filler material minimises agglomeration and any blended powders may be easily fed into processing equipment, e.g. using automated hoppers.

### Brief description of the drawings

This and other aspects of the present invention will now be described in more detail, with reference to the appended drawing(s) showing embodiments(s) of the invention.
Figure 1a shows a shaped article made in accordance with the present invention in the form of a Luneburg lens.
Figure 1b shows a shaped article made in accordance with the present invention in the form of a vehicle bumper.
Figure 2 shows results obtained in connection with Example 2.
Figure 3 shows results obtained in connection with Example 3.
Figure 4 shows results obtained in connection with Example 4.

### Detailed description of the invention

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference numerals in the drawings refer to like elements throughout.

The present inventors have found that in connection with various applications, it would be desirable to provide a range of compositions that were able to operate across a broad temperature range, e.g. about -60 °C to about +90 °C (or more specifically about -55 °C to +80 °C) without a significant deviation occurring with other material properties such as the dielectric constant or the permittivity. In particular, the present inventors have found that compositions possessing high dielectric constant (permittivity) and low loss tangents while at the same time retaining good rheological properties such as low viscosity are, surprisingly, achievable.

With regard to the various applications for which the polymer compositions may be used, though the present application may tend to focus on the construction of multi-layered (RF) lens structures, it will be appreciated that the techniques and compositions described herein are also applicable to, *inter alia,* any multi-layered/multipart assembly comprising (thermoplastic) parts and particularly complex shaped articles.

### (Host) polymer

The polymer composition comprises, *inter alia,* a polymer which may be referred to herein as the host polymer. The (host) polymer is high density polyethylene (HDPE).

The polymer may be a copolymer or a homopolymer. The polymer may be in the form of a resin. The term resin may be taken to mean a polymer material, either solid or liquid, prior to its shaping in to the shaped article. Typical densities and mean molecular weight values are provided in Table 1 for some polymers.

**Table 1**

| **PE type** | **Typical Density (g/cm³)** | **Mean molecular weight (g/mol)** |
|---|---|---|
| LDPE | 0.910-0.925 | <200,000 |
| LLDPE | 0.910-0.940 | <50,000 |
| HDPE | 0.941-0.965 | <50,000 |
| PP | 0.900-0.910 | <350,000 |

The host polymer may be crosslinked after formation of the shaped article. This may be referred to herein as a post-production step. Preferably, crosslinking is carried out using electron beam crosslinking. Typically, crosslinking may be achieved by irradiating the polymer composition or shaped article between about 21 kiloGrays (kGy) and about 300 kiloGrays, preferably between about 120 kGy and about 240 kGy, most preferably at least about 147 kGy. Preferably, a fully assembled and final product would be treated in this manner rather than individual or constituent parts or layers thereof. Advantageously, cross-linking of the polymer may increase the service temperature and heat deflection temperature of the post-assembled multilayered article whilst still allowing the thermoplastic properties (i.e. re-melting) to be used during assembly of the article. By service temperature is meant the temperature at which the polymer is used in a particular application. An alternative term for service temperature is operating temperature. Crosslinking the HDPE results in the operational temperature range being broadened.

### Filler Material

The filler material is selected from a metal oxide which is surface treated (e.g. coated) to form a surface treated (e.g. coated) metal oxide. The filler material may comprise, consist of, or consist essentially of surface treated metal oxide. The filler material may comprise, consist of, or consist essentially of coated metal oxide.

The filler material may be a particulate filler material. The filler material may comprise, consist of, or consist essentially of a surface treated (e.g. coated) metal oxide. The metal oxide may comprise one or more of the following metals: Lithium, sodium, magnesium, calcium, titanium, vanadium, iron, nickel, copper, zinc, gallium, strontium, zirconium, niobium, molybdenum, palladium, silver, barium, tantalum, tungsten, lead, bismuth, lanthanum, cerium, praseodymium, neodymium, samarium, dysprosium, thulium, yttrium, manganese, germanium, aluminium, chromium, cobalt.

Hence, the surface treated (e.g. coated) metal oxide may comprise, or consist of, or consist essentially of one or more of lithium oxide, sodium oxide, magnesium oxide, calcium oxide, titanium dioxide, vanadium oxide, iron oxide, nickel oxide, copper oxide, zinc oxide, gallium oxide, strontium oxide, zirconium dioxide, niobium oxide, molybdenum trioxide, palladium oxide, silver oxide, barium oxide, tantalum oxide, tungsten oxide, lead oxide, bismuth oxide, lanthanum oxide, cerium oxide, praseodymium oxide, neodymium oxide, samarium oxide, dysprosium oxide, thulium oxide, yttrium oxide, manganese oxide, germanium oxide, aluminium oxide, chromium oxide, cobalt oxide.

Examples of metal oxides for use in accordance with the present invention include analogues of the above mentioned metals. Examples of other metal oxides suitable for use in accordance with the present invention, which may also be referred to herein as analogue metal oxides, include metal titanate, metal zirconate, metal niobate, metal tantalate, metal oxynitride.

The metal oxide may comprise, consist of, or consist essentially of any one of magnesium titanate, calcium titanate, strontium titanate or titanium dioxide. The metal oxide may comprise, consist of, or consist essentially of any combination of magnesium titanate, calcium titanate, strontium titanate and titanium dioxide. Strontium titanate and titanium dioxide are preferred with titanium dioxide being particularly preferred, especially the rutile crystal structure of titanium dioxide.

Relative to the total dry volume of the filled polymer, the filler material, (or surface treated, e.g. coated metal oxide) may be present in an amount of at least about 0.1 vol%, or at least about 5 vol%, or at least about 10 vol%, or at least about 15 vol%, or at least about 20 vol%, or at least about 30 vol%, or at least about 40 vol%, or at least about 50 vol%, or at least about 60 vol%, or at least about 65 vol%, or at least about 70 vol%. The filler material may be present up to about 75 vol%, or up to about 70 vol %. Relative to the total dry volume of the filled polymer, the coated filler material may be present in an amount of at least about 15 vol% to about 75 vol%, or at least about 20 vol% to about 75vol%, or at least about 30 vol% to about 75 vol%, or at least about 40 vol% to about 75 vol%, or at least about 45 vol% to about 75 vol%, or at least about 50 vol% to about 75 vol% or at least about 60 vol% to about 75 vol%. The upper limit for all of these ranges may be up to about 75 vol % or up to about 70 vol %. The amount of filler material present in the polymer is measured based on the total volume of the dry components of the filled polymer. With respect to the relative amounts present herein, reference to the filler material may be to the filler material itself or to the surface treated (e.g. coated) metal oxide.

The metal oxide may be surface treated with a coating agent or a surface treatment agent. The coating or surface treatment agent may be present in an amount of about 0.5 wt% to about 10 wt%, preferably about 0.7 wt% to about 5 wt %, most preferably about 0.9 wt% to about 2 wt% based on the surface treated (e.g. coated) weight of the surface treated or coated metal oxide. The metal oxide may be partially coated or partially surface treated with a silane or the metal oxide may be completely coated or completely surface treated with a silane. The metal oxide may be surface treated over some or all of its surface. The metal oxide may be partially coated or completely coated. When the metal oxide is partially coated or partially treated there may be one or more distinct areas of the surface of the metal oxide which remain uncoated or untreated.

The metal oxide may be surface treated or coated with a coupling agent or a dispersant. The metal oxide may be surface treated or coated with any one or more of; a silane (for example an organosilane), a metal salt, an aluminate (for example, a zircoaluminate), a titanate, an unsaturated acid, an acid functionalised polymer. Suitable commercially available coupling agents and/or dispersants (i.e. adhesion promoters) may be obtained from Chartwell International Inc. A suitable example of such a commercially available material is a zirconate titanate. The coating agent or surface treatment agent may be a silane, (for example an organosilane), a metal salt, an aluminate (for example, a zircoaluminate), a titanate, an unsaturated acid, an acid functionalised polymer. The coating agent or surface treatment agent may comprise, may consist of, or may consist essentially of a silane, (for example an organosilane), a metal salt, an aluminate (for example, a zircoaluminate), a titanate, an unsaturated acid, an acid functionalised polymer. The metal oxide may be partially coated or partially surface treated with a silane or the metal oxide may be completely coated or completely surface treated with a silane. The metal oxide may be partially coated or partially surface treated with a metal salt, an aluminate (for example, a zircoaluminate), a titanate, an unsaturated acid, an acid functionalised polymer. The metal oxide may be completely coated or completely surface treated with a metal salt, an aluminate (for example, a zircoaluminate), a titanate, an unsaturated acid, an acid functionalised polymer.

The silane may be selected from any silane that will assist in improving the flowability of the filler material and the dispersion of the filler material in the polymer. The silane may make the filler surface hydrophobic, i.e. the presence of the silane will make the filler surface more hydrophobic than the filler in the absence of the silane. By making the filler surface hydrophobic or more hydrophobic in character then the filler will disperse less well in water. The silane may be an organosilane. Typical examples of silanes which may be used in any aspect or embodiment of the present invention include methacryl silanes, for example, a methacryloxy functional trimethoxy silane such as (gamma)-methacryloxypropyltrimethoxy silane. Other silanes include vinyl silanes, for example vinyltrimethoxy silane, vinyltriethoxy silane, and organofunctional silanes and non-organoreactive silanes, for example, alkyeneoxide silanes, trimethoxy silanes.

The metal oxide may be surface treated (e.g. coated) by combining a surface treatment or coating agent and filler material or metal oxide in the presence of an acidic environment (e.g. in a solution). The filler material or metal oxide and surface treatment or coating agent may all be combined with said acidic solution and mixed or sprayed and heated. Any excess solvent may be evaporated off following coating and the surface treated (e.g. coated) filler cured at an appropriate temperature. Typical curing temperatures may be of the order of about 120 °C. Typical curing times may be of the order of about 1 hour.

The filler material or the metal oxide may be present in the form of particles in one or more of a range of shapes, for example, plate shaped particles, spherical particles, irregular shaped particles, flakes. Preferably, the filler material or metal oxide is of a high purity grade, for example greater than about 95 wt% pure, or greater than about 96 wt% pure, or greater than about 97 wt% pure, or greater than about 98 wt% pure. The filler material or metal oxide may possess a particle size ranging from about 1 nm, or from about 0.1 µm, or from about 0.5 µm, or from about 1 µm to about 200 µm. The filler material or metal oxide may possess a particle size ranging from about 1nm to about 0.1 µm, or from about 1nm to about 0.5 µm, or from about 1nm to about 1 µm. The filler material or metal oxide may possess a particle size ranging from about 0.1 µm to about 0.5 µm, or from about 0.1 µm to about 1 µm, or from about 0.1 µm to about 200 µm. The filler material or metal oxide may be present in multimodal, for example, bimodal form.

### Compounding

The host polymer may be filled by methods in which a filler material (typically present in particulate form) and a polymer resin are mixed together in suitable ratios to form a blend (so-called "compounding"). Typically, the filler material is surface treated or coated prior to compounding with the polymer. The present inventors have found that one of the challenges with the compounding recipe is to incorporate the required volume fraction (Vf) of (particulate) filler material (which may be referred to herein as "filler Vf"), whilst maintaining appropriate melt rheology to allow suitable flow for subsequent moulding processing (e.g. injection moulding) and to provide adequate mechanical and environmental properties for the finished parts. Polymer resins of high Melt Flow Rate (MFR) are useful for providing high filler Vf. Suitable grades of PE and PP may possess the desired MFR. HDPE is used. Melt flow rates of at least about 100 g per 10 min, or at least about 200 g per 10 min are preferred, however lower flow rates are also suitable such as at least 20 g per 10 min, for example in connection with the use of HDPE. MFRI is measured at the melt processing temperature of the polymer. For example, this is typically at about 190 °C for HDPE and typically at about 230 °C for PP.

Broadly, the method of forming the polymer composition may comprise: surface treating (e.g. coating) of the filler material (as an additional optional step); blending of surface treated (e.g. coated) filler material and polymer (and optionally other additives such as a lubricant), compounding of the blend, optionally pelletizing the compounded filled polymer composition. Other additives which may be present include one or more of the following: wetting agents, plasticisers, dispersants, flame retardants, mould release agents, nucleating agents, impact modifiers, adhesion promotors, antioxidants, heat stabilisers, antimicrobial agents, acid scavengers, antiblock agents, antistatic agents, compatibilisers, conductivity enhancers, UV protectors and light stabilisers. Optionally, and in addition to the presence of surface treated metal oxide, the filler material may comprise metal oxide wherein the surface thereof has not been treated.

The polymer resin may be in a form (e.g. liquid form) to enable the filler material to be dispersed therein. Where the polymer resins are solid at ambient temperatures, the polymer resin may need to be melted before the compounding can be accomplished. In some embodiments, the filler material may be dry blended with particles of the polymer resin.

The polymer resin, the filler material comprising, or consisting of, or consisting essentially of the surface treated (e.g. coated) metal oxide, and if necessary, any other optional additives such as one or more lubricants, may be formed into a suitable masterbatch by the use of a suitable compounder/mixer in a manner known per se. The masterbatch may be pelletized, e.g. by the use of a single screw extruder or a twin-screw extruder which forms strands which may be cut or broken into pellets. The compounder may have a single inlet for introducing the filler and the polymer resin together and any other constituents. Alternatively, separate inlets may be provided for the filler material and the polymer resin plus any other necessary constituents. Suitable compounders are available commercially, for example from Coperion (formerly Werner & Pfleiderer). Preferably, the polymer composition in accordance with the present invention is prepared prior to injection moulding.

Typically for a twin screw extruder process, temperatures across the barrel will be set between about 120 °C (in the vicinity of the extruder head) and about 240 °C (in the vicinity of the feed end). Typically, the rotation rate is about 200-350 rpm and the hopper feed speed is about 0.8 m/s.

Other materials may be incorporated in the blend. For example, pre-treatment of filler material using surface modifiers, such as organosilane or organotitanate, assist the filler flow in the compounding hopper, and/or polymer wet-out, and/or deagglomeration and/or a reduction in melt viscosity.

One or more lubricating agents may be incorporated in the blend to reduce melt viscosity and/or improve flow and strand forming capabilities. Lubricating agents may be external or internal lubricants such as waxes, paraffins, metal soaps, low and high esterification esters, amides, fatty acids and fatty alcohols. Preferably, lubricating waxes are used in an amount ranging from about 0.5% to about 7% by volume based on the total weight of the polymer composition. The lubricant (e.g. wax) is preferably chosen to be compatible with the host polymer. Examples of suitable lubricating waxes are one or more of polyolefin (e.g. polyethylene) waxes (selected from polar and non-polar), amide waxes or montan waxes.

The lubricant can be an external lubricant, for example to prevent damage to the composition or the processing equipment such as moulds. The lubricant can be an internal lubricant acting to improve processability of the polymer or polymer composition. The processability of the polymer (composition) may be improved through one or more of an improvement in melt flow (typically an increase), viscosity (e.g. lowered), and heat dissipation (e.g. increased) of the polymer (composition). Polyolefin wax, amide wax and montan ester type waxes are preferred lubricants, most preferably the waxes are matched to the host polymer system, for example polyethylene waxes for use with polyethylene host polymers.

The drop point temperature range for the lubricant (according to ASTM D3954) may be about 90 °C to about 150 °C, preferably from about 100 °C to about 130 °C, most preferably from about 100 °C to about 118 °C.

### The shaped article

The shaped article in accordance with the present invention may be formed using a moulding technique such as injection moulding.

Injection moulding is a manufacturing process for producing parts by injecting molten material into a mould. Material for the part is typically fed into a heated container (e.g. a barrel), mixed (typically using a helical shaped screw) and injected or forced into a mould cavity where it cools and hardens to the configuration of the cavity. The mould may be made from metal such as steel or aluminium and precision machined to form the features of the desired part. Injection moulding is ideal for producing high volumes of the same object.

Typically, injection moulding uses a ram or screw-type plunger to force molten plastic material under high pressure into a mould cavity. This solidifies into a shape that has conformed to the contour of the mould. Thermoplastics are highly suitable for injection moulding such is the ease with which they may be recycled, their versatility allowing them to be used in a wide variety of applications, and their ability to soften and flow upon heating. Moulds may be of a single cavity or multiple cavities.

When thermoplastics are moulded, typically, pelletized raw material is fed through a hopper into a heated barrel with a reciprocating screw. Upon entrance to the barrel, the temperature increases and the viscosity is reduced enabling the polymer to flow with the driving force of the injection unit. The screw delivers the raw material forward, mixes and homogenises the thermal and viscous distributions of the polymer, and reduces the required heating time by mechanically shearing the material and adding a significant amount of frictional heating to the polymer. The material feeds forward through a check valve and collects at the front of the screw into a volume known as a shot. A shot is the volume of material that is used to fill the mould cavity and provides a cushion to transfer pressure from the screw to the mould cavity. When enough material has gathered, the material may be forced at high pressure and velocity into the part forming cavity. To prevent spikes in pressure, the process typically uses a transfer position corresponding to a 95-98% by volume full cavity where the screw shifts from a constant velocity to a constant pressure control. Often, injection times are well under one second. Once the screw reaches the transfer position the packing pressure is applied until the gate or cavity entrance solidifies. Due to its small size, the gate is normally the first place to solidify through its entire thickness. Once the gate solidifies, no more material can enter the cavity and accordingly the screw reciprocates and acquires material for the next cycle while the material within the mould cools so that it can be ejected and be dimensionally stable. Once the required temperature has been achieved, the mould opens and an array of pins, sleeves, strippers are driven forward to demould or release the article. Then the mould closes and the process is repeated.

For a so-called two shot mould, two separate materials are incorporated into one part. This type of injection moulding is useful in providing a product possessing multiple colours or in producing a part with multiple performance characteristics.

Pre-moulded or machined components can be inserted into the cavity while the mould is open, allowing the material injected in the next cycle to form and solidify around them. This process is known as insert moulding and allows single parts to contain multiple materials.

Injection moulding is advantageous over other moulding techniques for a variety of reasons, including a lower cycle time and improved process control.

### Uses of the shaped polymer article

The shaped polymer article formed in accordance with the present invention may be used in a range of applications.

The shaped article may be made from one part, or more than one part, one layer or more than one layer. The shaped article may be multi-layered. The boundaries between at least two layers may be diffuse or not distinct in so far as the layers may diffuse into each other. These boundary layers may be referred to herein as diffuse layer boundaries. The use of diffuse layer boundaries may be used in providing graded structures. The shaped article may be used in connection with a range of applications.

One or more of the polymer compositions in accordance with the present invention which are comprised in a shaped article may be combined with or integrated with other structure(s) or component(s). For example, they may be combined or integrated with a metal comprising substrate such as an electrode. The other structures or components may be embedded in the polymer composition or the polymer composition may encapsulate or partly cover said structure(s) or component(s). The shaped article in accordance with the present invention may be or form a part of an antenna structure such as a patch antenna.

The compositions and methods in accordance with the present invention are well suited for use with functional polymer parts, which might be heavily loaded with any one or more of a range of filler materials including those which provide one or more of the following functions: dielectric, magnetic, conductive, antimicrobial, catalytic.

The compositions in accordance with the present invention are suitable for forming beam forming lens, for example for frequencies from about 3 KHz to 300 GHz, and corresponding wavelengths from about 100 km to about 1 mm, as well as the frequency range of 100 GHz to 30 terahertz with corresponding wavelengths of 3mm to 0.01mm.

The composition and methods in accordance with the present invention are also well suited for preparing complex, irregular and/or doubly curved shapes of varying section thickness.

The shaped articles formed in accordance with the method of the invention may be suitable for use in a broad range of applications including; electronic or electromechanical sensors, actuators, solenoids, motors, acoustic sound dampening claddings and mounts, multi-material enclosures, vehicle components (e.g. a bumper), power tool components and pharmaceutical components such as prosthetics, implants, drug delivery systems, applicators and catheters.

The shaped articles formed in accordance with the method of the invention may be suitable for use in RF applications such as; RF lenses (e.g. a Luneburg lens), retro-reflectors, RF waveguides, RF filters, RF resonators, metamaterial structures, refraction structures, diffraction structures, or scattering structures.

The shaped article in accordance with the present invention may be a multilayer structure or a multipart structure. At least two of the layers or parts constituting the multilayer or multipart structure may each possess different material properties. For example, each part may possess at least one of a different dielectric constant (permittivity), density, magnetic permeability, electrical conductivity, thermal conductivity, modulus or colour. The value of the permittivity of the material properties of different parts may be controlled by varying, independently of each other, one or any combination of polymer, filler, coating or surface treatment agent, additives (e.g. lubricant), and relative amounts thereof.

The at least two layers or parts may be in the form of layers. Any number of the parts may be curved, e.g. doubly curved. By a doubly curved surface is meant a surface which has its radius in simultaneously two planes. Spheres and hemispheres are examples of doubly-curved surfaces. All of the layers in the shaped article may be curved, e.g. doubly curved. Each of the layers may possess different material properties, such as permittivity. This represents a particular advantage of the present invention. Despite the incorporation of high levels of treated filler materials, and optionally other additives, the compositions may still be readily worked by retaining, for example, good rheology properties and formed into complex shapes.

The shaped article may be a functional product filled with various filler constituents to allow it to carry out a function, such as electrically conductive fillers to act as an electrical conductor, magnetic fillers to act as a magnet, or dielectric fillers to influence RF energy for an RF product. For example, the shaped article may be a lens, e.g. a multilayer lens, e.g. a beamforming lens, e.g. a Luneburg lens. The lens may comprise or consist of curved layers. At least one, or any combination, of the layers may be doubly curved. Each of the layers may possess a different permittivity or loss tangent.

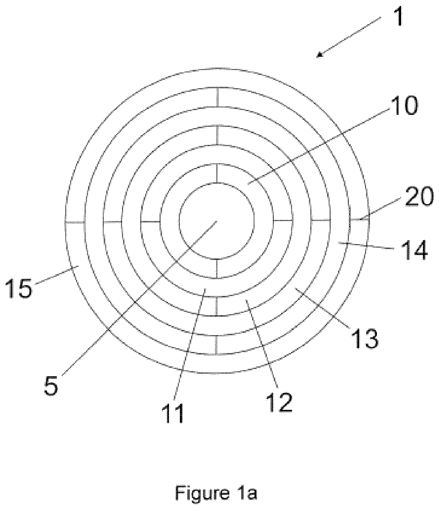

Figure 1a is a schematic (cross-sectional) representation of a Luneburg lens made in accordance with the present invention. The Luneburg lens example shown (1) comprises a central core (5) surrounded by six shells (10-15). There may be fewer or more shells. The central core (5) possesses the highest dielectric constant. Moving outwards from core (5) to the outermost layer (15), the dielectric constant becomes progressively smaller. In terms of the magnitude of dielectric constant or permittivity, in Figure 1a, then (5) > (10) > (11) > (12) > (13) > (14) > (15). Each shell may be made of two semi-spherical parts which are set one against the other around the previous shell. The contact surfaces of the two parts constituting two adjacent shells may be at 90 ° or substantially 90 ° in order to reduce the lack of homogeneity which could occur. A contact surface is illustrated at (20). Shell (10) encases the central core (5). The outermost layer (15) possesses the lowest dielectric constant when compared with the other layers of the lens and may be present in the form of a foam. An external cover or radome (not shown) may completely cover the lens (1) in order to make it weatherproof. The precise nature of the weatherproof cover may depend on what use the lens structure is put.

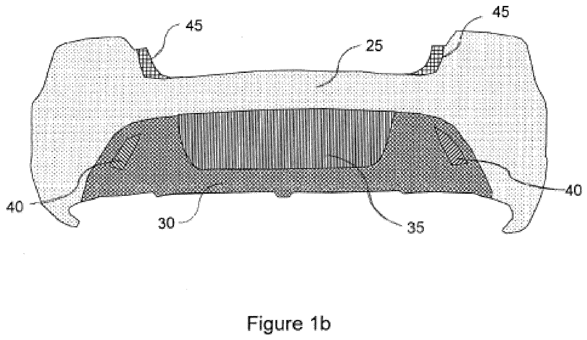

Figure 1b shows a shaped article made in accordance with the present invention in the form of a vehicle bumper. The vehicle bumper form comprises different filled polymer compositions of varying (complex) shapes. The vehicle bumper form may be made of fewer or more varying (complex) shapes. The different filled polymer compositions are indicated at (25), (30), (35), (40), and (45) and are typically made in an injection moulding process. The vehicle bumper may be made using either over-moulding or welding of said different polymer compositions or a combination thereof.

The person skilled in the art realizes that the present invention is by no means limited to the preferred embodiments described above. On the contrary, many modifications and variations are possible within the scope of the appended claims.

### Examples

### Example 1

Samples of TiO₂ were coated with silane in accordance with the following procedure.

An aqueous solution of isopropyl alcohol was prepared and stirred for 5 minutes. Acid was added to bring the pH of the solution to the appropriate hydrolysis conditions.

1.5 wt% silane (based on the weight of the TiO₂) was added to the solution and mixed at room temperature for 30 minutes.

TiO₂ was added to the solution and mixed for 30 minutes at an increased temperature.

The temperature was further increased and mixed for another 30 minutes.

Any excess solvent was evaporated.

The coated filler was cured in an oven at an elevated temperature for 1 hour.

The silanes used for coating the TiO₂ were as follows: methacryloxypropyltrimethoxy silane (A-174-NT, Silquest), vinyltriethoxy silane (A-151-NT, Silquest), a proprietary organofunctional silane comprising vinyl functionality, (VX-193, Silquest) and a proprietary alkyleneoxidetrimethoxy silane (A-1230, Silquest).

### Example 2

In Examples 2 and 3, the viscosity was measured on a Kinexus Ultra+ (model no KNX2312). The sample heating was 200 °C, the shear rate was 0 - 1.5 s⁻¹, the number of samples tested was 30, the duration of the experiment was 3 minutes, and the sweep was a linear shear rate.

A number of filled polymer compositions were prepared to investigate the effect of silane treatment on TiO₂ after compounding in HDPE. The silanes used for coating the TiO₂ at 1.5 wt% were as follows: methacryloxypropyltrimethoxy silane (A-174-NT, Silquest), vinyltriethoxy silane (A-151-NT, Silquest), a proprietary organofunctional silane comprising vinyl functionality (VX-193, Silquest), and a proprietary alkyleneoxidetrimethoxy silane (A-1230, Silquest).

As set out in Table 2, the amount of coated TiO₂ was 50 vol%, the amount of HDPE was 48 vol% and the amount of lubricant (PE wax) was 2 vol% for all four samples.

**Table 2**

| **Sample No** | **Polymer (vol%)** | **Coated Filler (vol%)** | **Coating agent** | **Lubricant (vol%)** |
|---|---|---|---|---|
| 1 | HDPE (48) | TiO₂ (50) | A-174-NT | PE wax (2) |
| 2 | HDPE (48) | TiO₂ (50) | A-151-NT | PE wax (2) |
| 3 | HDPE (48) | TiO₂ (50) | VX-193 | PE wax (2) |
| 4 | HDPE (48) | TiO₂ (50) | A-1230 | PE wax (2) |

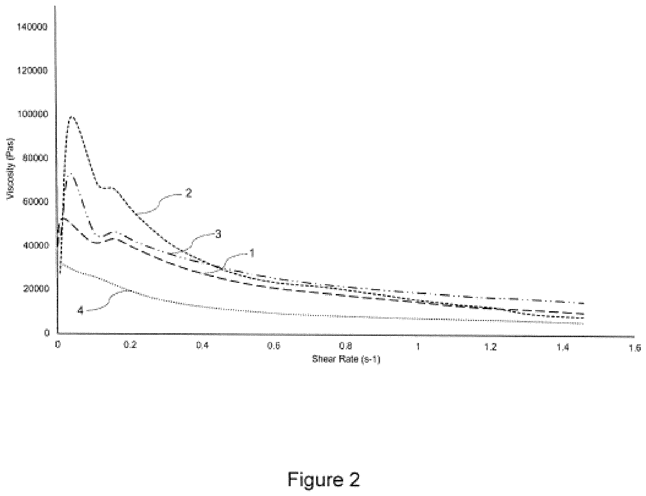

The rheology characteristics are illustrated in Figure 2. The permittivity and loss tangent are reported in Table 3 below.

**Table 3**

| **Sample No** | **Permittivity** | **Loss Tangent** |
|---|---|---|
| 1 | 14.74 | 0.0022 |
| 2 | 14.45 | 0.007 |
| 3 | 15.05 | 0.002 |
| 4 | 17.51 | 0.0078 |

### Example 3

In Example 3, a number of samples were prepared as set out in accordance with Table 4. The level of silane coating was 1.5 wt%.

**Table 4**

| **Sample No** | **Coated Filler (vol%)** | **Polymer (vol%)** | **Coating agent** | **Lubricant (vol%)** |
|---|---|---|---|---|
| 5 | TiO₂ (45) | HDPE (55) | none | none |
| 6 | TiO₂ (47) | HDPE (51) | none | PE wax (2%) |
| 7 | TiO₂ (50) | HDPE (48) | A-174-NT | PE wax (2%) |
| 8 | TiO₂ (45) | HDPE (53) | none | PE wax(2%) |
| 9 | TiO₂ (50) | HDPE (48) | none | PE wax (2%) |

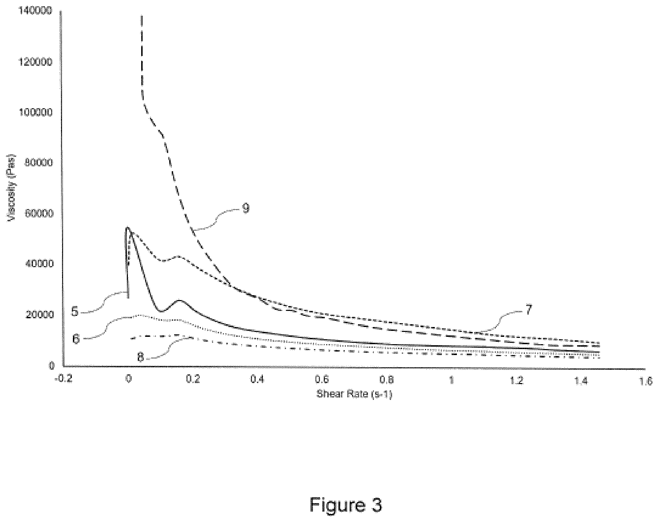

The rheology characteristics are illustrated in Figure 3. The permittivity and loss tangent are reported in Table 5 below.

**Table 5**

| **Sample No** | **Permittivity** | **Loss Tangent** |
|---|---|---|
| 5 | 14.30 | 0.0015 |
| 6 | 15.44 | 0.0016 |
| 7 | 14.74 | 0.0022 |
| 8 | 15.18 | 0.001 |
| 9 | 18.14 | 0.0038 |

### Example 4

In example 4 (reference example), a number of samples were prepared as set out in accordance with Table 6. The level of silane coating was 1.5 wt%.

**Table 6**

| **Sample No** | **Coated Filler (vol%)** | **Polymer (vol%)** | **Coating agent** | **Lubricant (vol%)** |
|---|---|---|---|---|
| 10 | SrTiO₃ (45) | PP (55) | none | none |
| 11 | SrTiO₃ (60) | PP (40) | A-174-NT | none |
| 12 | SrTiO₃ (60) | PP (38) | A-174-NT | PP wax (2%) |
| 13 | SrTiO₃ (60) | PP (40) | A-151-NT | none |

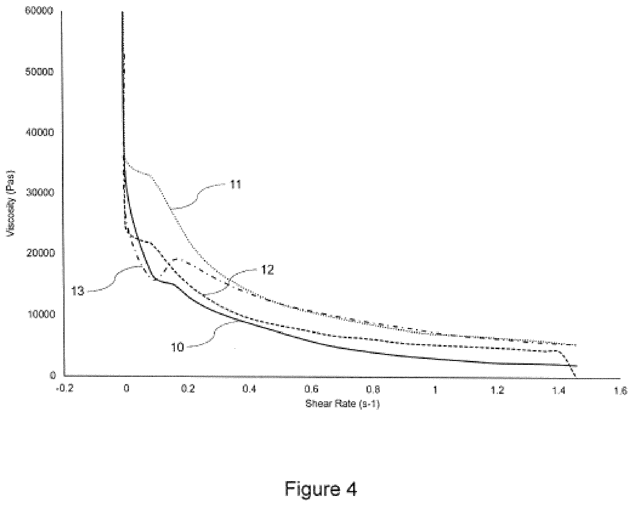

The rheology characteristics are illustrated in Figure 4. The permittivity and loss tangent are reported in Table 7 below.

**Table 7**

| **Sample No** | **Permittivity** | **Loss Tangent** |
|---|---|---|
| 10 | 13.68 | 0.0021 |
| 11 | 26.77 | 0.0067 |
| 12 | 24.54 | 0.0057 |
| 13 | 23.46 | 0.0029 |

## Claims

1. A polymer composition (25, 30, 35, 40, 45) comprising a polymer and a filler material, wherein the filler material comprises a surface treated metal oxide;
wherein the surface treated metal oxide is present in an amount of at least about 5 vol%, or at least about 20 vol%, based on the total dry volume of the polymer composition (25, 30, 35, 40, 45); and
the polymer composition (25, 30, 35, 40, 45) is **characterised in that** the polymer is high density polyethylene (HDPE).

2. A polymer composition (25, 30, 35, 40, 45) according to claim 1, wherein the metal oxide is surface treated with:
a silane; or
one or more of: a metal salt, an aluminate (for example, a zircoaluminate), a titanate (for example a zirconate titanate), an unsaturated acid, an acid functionalised polymer.

3. A polymer composition (25, 30, 35, 40, 45) according to claim 1 or 2, wherein the metal oxide comprises, or consists of, or consists essentially of one or more of lithium oxide, sodium oxide, magnesium oxide, calcium oxide, titanium dioxide, vanadium oxide, iron oxide, nickel oxide, copper oxide, zinc oxide, gallium oxide, strontium oxide, zirconium dioxide, niobium oxide, molybdenum trioxide, palladium oxide, silver oxide, barium oxide, tantalum oxide, tungsten oxide, lead oxide, bismuth oxide, lanthanum oxide, cerium oxide, praseodymium oxide, neodymium oxide, samarium oxide, dysprosium oxide, thulium oxide, yttrium oxide, manganese oxide, germanium oxide, aluminium oxide, chromium oxide, cobalt oxide.

4. A polymer composition (25, 30, 35, 40, 45) according to any one of claims 1 to 3 wherein the metal oxide is titanium dioxide and optionally the titanium dioxide is in the rutile form.

5. A polymer composition (25, 30, 35, 40, 45) according to claim 1 or 2, wherein the metal oxide comprises, consists of, or consists essentially of one or more of a metal titanate, a metal niobate, a metal zirconate, a metal tantalate, a metal oxynitride.

6. A polymer composition (25, 30, 35, 40, 45) according to claim 1 or 2, wherein the metal oxide comprises, consists of, or consists essentially of a metal titanate, and the metal titanate is selected from any one or more of bismuth titanate, barium titanate, strontium titanate, cerium titanate, lanthanum titanate, samarium titanate, tantalum titanate, lead titanate, zirconium titanate, calcium titanate, niobium titanate, barium strontium titanate, calcium copper titanate (e.g. CaCu₃Ti₄O₁₂).

7. A polymer composition (25, 30, 35, 40, 45) according to claim 1, 2 or 6, wherein the metal oxide is strontium titanate.

8. A polymer composition (25, 30, 35, 40, 45) according to claim 1 or 2, wherein the metal oxide comprises, consists of, or consists essentially of:
a metal niobate, and the metal niobate is selected from one or more of barium niobate, bismuth zinc niobate (e.g. Bi _{1.5}Zn_{0.92}Nb_{1.5}O_{6.92}), barium titanium galium niobate (e.g. BaTi_{0.7}Ga_{0.15}Nb_{0.15}O₃), silver tantalum niobate (e.g. AgTa_{0.57}Nb_{0.43}O₃);
a metal zirconate, and the metal zirconate is selected from one or more of calcium zirconate, (e.g. Ca₂ZrO₄), lead zirconate, lead calcium zirconate (e.g. Pb_{0.7}Ca_{0.3}ZrO₃);
a metal tantalate, and the metal tantalate is selected from one or more of barium lanthanum titanium tantalate (e.g. Ba₃La₃Ti₅Ta₆O₃₀), silver tantalate (Ag_{0.52}Ta_{0.48}O₃); or
a metal oxynitride, and the metal oxynitride is selected from strontium tantalum oxynitride (SrTaO₂N).

9. A polymer composition (25, 30, 35, 40, 45) according to claim 1 or 2, wherein the metal oxide is surface treated with:
a silane and wherein the silane is selected from methacryl silanes, for example, a methacryloxy functional trimethoxy silane such as (gamma)-methacryloxypropyltrimethoxy silane, vinyl silanes, for example vinyltrimethoxy silane, vinyltriethoxy silane, and organofunctional silanes and non-organoreactive silanes, for example, alkyeneoxide silanes, trimethoxy silanes; or
a metal salt, an aluminate (for example, a zircoaluminate), a titanate (for example a zirconate titanate), an unsaturated acid, an acid functionalised polymer.

10. A polymer composition (25, 30, 35, 40, 45) according to any preceding claim, wherein the metal oxide is surface treated in an amount of about 0.5 wt% to about 10 wt%, or about 0.7 wt% to about 5 wt%, or about 0.9 wt% to about 2 wt%, based on the weight of the surface treated metal oxide.

11. A polymer composition (25, 30, 35, 40, 45) according to any preceding claim, wherein the surface treated metal oxide is present in an amount of at least about 30 vol%, or in an amount of at least about 40 vol%, or in an amount of at least about 50 vol% based on the total volume of the polymer composition (25, 30, 35, 40, 45).

12. A polymer composition (25, 30, 35, 40, 45) according to any preceding claim, wherein the polymer composition (25, 30, 35, 40, 45) also comprises a lubricant, optionally wherein the lubricant is present in an amount of about 0.5% to about 5% by weight based on the total weight of the polymer composition (25, 30, 35, 40, 45); wherein optionally: the lubricant is selected from one or more of waxes, paraffins, metal soaps, low and high esterification esters, amides, fatty acids and fatty alcohols, optionally wherein the lubricant is selected from a polyolefin wax, for example polyethylene wax.

13. A method of making a polymer composition (25, 30, 35, 40, 45) in accordance with any one of claims 1 to 12, wherein the method comprises combining a polymer and a filler material, wherein the filler material comprises a surface treated metal oxide and the surface treated metal oxide is present in an amount of at least about 5 vol%, or at least about 20 vol%, based on the total dry volume of the polymer composition (25, 30, 35, 40, 45);
wherein the method is **characterised in that** the polymer is high density polyethylene (HDPE).

14. A shaped article (1) formed from or comprising the polymer composition (25, 30, 35, 40, 45) in accordance with any one of claims 1 to 12, for example wherein the shaped article is selected from a radome, RF lens, Luneburg lens, retro-reflector, RF waveguide, RF filter, RF resonator, metamaterial structure, refraction structure, diffraction structure, scattering structure or forms a part thereof.

## Patentansprüche

1. Polymerzusammensetzung (25, 30, 35, 40, 45), umfassend ein Polymer und ein Füllmaterial, wobei das Füllmaterial ein oberflächenbehandeltes Metalloxid umfasst;
wobei das oberflächenbehandelte Metalloxid in einer Menge von mindestens etwa 5 Vol.-% oder mindestens etwa 20 Vol.-%, basierend auf dem gesamten Trockenvolumen der Polymerzusammensetzung (25, 30, 35, 40, 45), vorhanden ist; und
die Polymerzusammensetzung (25, 30, 35, 40, 45) **dadurch gekennzeichnet ist, dass** das Polymer Polyethylen hoher Dichte (HDPE) ist.

2. Polymerzusammensetzung (25, 30, 35, 40, 45) nach Anspruch 1, wobei das Metalloxid oberflächenbehandelt ist mit:
einem Silan; oder
einem oder mehreren von: einem Metallsalz, einem Aluminat (beispielsweise einem Zirkoaluminat), einem Titanat (beispielsweise einem Zirkonat-Titanat), einer ungesättigten Säure, einem säurefunktionalisierten Polymer.

3. Polymerzusammensetzung (25, 30, 35, 40, 45) nach Anspruch 1 oder 2, wobei das Metalloxid eines oder mehrere von Lithiumoxid, Natriumoxid, Magnesiumoxid, Calciumoxid, Titandioxid, Vanadiumoxid, Eisenoxid, Nickeloxid, Kupferoxid, Zinkoxid, Galliumoxid, Strontiumoxid, Zirkoniumdioxid, Nioboxid, Molybdäntrioxid, Palladiumoxid, Silberoxid, Bariumoxid, Tantaloxid, Wolframoxid, Bleioxid, Wismutoxid, Lanthanoxid, Zeroxid, Praseodymoxid, Neodymoxid, Samariumoxid, Dysprosiumoxid, Thuliumoxid, Yttriumoxid, Manganoxid, Germaniumoxid, Aluminiumoxid, Chromoxid, Kobaltoxid umfasst, daraus besteht oder im Wesentlichen daraus besteht.

4. Polymerzusammensetzung (25, 30, 35, 40, 45) nach einem der Ansprüche 1 bis 3, wobei das Metalloxid Titandioxid ist und optional das Titandioxid in der Rutilform vorliegt.

5. Polymerzusammensetzung (25, 30, 35, 40, 45) nach Anspruch 1 oder 2, wobei das Metalloxid eines oder mehrere von einem Metalltitanat, einem Metallniobat, einem Metallzirkonat, einem Metalltantalat, einem Metalloxynitrid umfasst, daraus besteht oder im Wesentlichen daraus besteht.

6. Polymerzusammensetzung (25, 30, 35, 40, 45) nach Anspruch 1 oder 2, wobei das Metalloxid ein Metalltitanat umfasst, daraus besteht oder im Wesentlichen daraus besteht und das Metalltitanat aus einem oder mehreren von Wismuttitanat, Bariumtitanat, Strontiumtitanat, Zertitanat, Lanthantitanat, Samariumtitanat, Tantaltitanat, Bleititanat, Zirkoniumtitanat, Calciumtitanat, Niobtitanat, Bariumstrontiumtitanat, Calciumkupfertitanat (z. B. CaCu₃Ti₄O₁₂) ausgewählt ist.

7. Polymerzusammensetzung (25, 30, 35, 40, 45) nach Anspruch 1, 2 oder 6, wobei das Metalloxid Strontiumtitanat ist.

8. Polymerzusammensetzung (25, 30, 35, 40, 45) nach Anspruch 1 oder 2, wobei das Metalloxid Folgendes umfasst, daraus besteht oder im Wesentlichen daraus besteht:
ein Metallniobat, und wobei das Metallniobat aus einem oder mehreren von Bariumniobat, Wismutzinkniobat (z. B. Bi_{1,5}Zn_{0,92}Nb_{1,5}O_{6,92}), Bariumtitangaliumniobat (z. B. BaTi_{0,7}Ga_{0,15}Nb_{0,15}O₃), Silbertantalniobat (z. B. AgTa_{0,57}Nb_{0,43}O₃) ausgewählt ist;
ein Metallzirkonat, und wobei das Metallzirkonat aus einem oder mehreren von Calciumzirkonat (z. B. Ca₂ZrO₄), Bleizirkonat, Blei-Calciumzirkonat (z. B. Pb_{0,7}Ca_{0,3}ZrO₃) ausgewählt ist;
ein Metalltantalat, und wobei das Metalltantalat aus einem oder mehreren von Barium-Lanthan-Titan-Tantalat (z. B. Ba₃La₃Ti₅Ta₆O₃₀), Silber-Tantalat (Ag_{0,52}Ta_{0,48}O₃) ausgewählt ist; oder
ein Metalloxynitrid, und wobei das Metalloxynitrid aus Strontium-Tantal-Oxynitrid (SrTaO₂N) ausgewählt ist.

9. Polymerzusammensetzung (25, 30, 35, 40, 45) nach Anspruch 1 oder 2, wobei das Metalloxid oberflächenbehandelt ist mit:
einem Silan, und wobei das Silan ausgewählt ist aus Methacrylsilanen, beispielsweise einem methacryloxyfunktionellen Trimethoxysilan wie (gamma)-Methacryloxypropyltrimethoxysilan, Vinylsilanen, beispielsweise Vinyltrimethoxysilan, Vinyltriethoxysilan, und organofunktionellen Silanen und nicht-organoreaktiven Silanen, beispielsweise Alkyenoxidsilanen, Trimethoxysilanen; oder
einem Metallsalz, einem Aluminat (beispielsweise einem Zirkoaluminat), einem Titanat (beispielsweise einem Zirkonat-Titanat), einer ungesättigten Säure, einem säurefunktionalisierten Polymer.

10. Polymerzusammensetzung (25, 30, 35, 40, 45) nach einem der vorhergehenden Ansprüche, wobei das Metalloxid in einer Menge von etwa 0,5 Gew.-% bis etwa 10 Gew.-% oder etwa 0,7 Gew.-% bis etwa 5 Gew.-% oder etwa 0,9 Gew.-% bis etwa 2 Gew.-%, basierend auf dem Gewicht des oberflächenbehandelten Metalloxids, oberflächenbehandelt ist.

11. Polymerzusammensetzung (25, 30, 35, 40, 45) nach einem der vorhergehenden Ansprüche, wobei das oberflächenbehandelte Metalloxid in einer Menge von mindestens etwa 30 Vol.-% oder in einer Menge von mindestens etwa 40 Vol.-% oder in einer Menge von mindestens etwa 50 Vol.-%, basierend auf dem Gesamtvolumen der Polymerzusammensetzung (25, 30, 35, 40, 45), vorhanden ist.

12. Polymerzusammensetzung (25, 30, 35, 40, 45) nach einem der vorhergehenden Ansprüche, wobei die Polymerzusammensetzung (25, 30, 35, 40, 45) außerdem ein Schmiermittel umfasst, wobei optional das Schmiermittel in einer Menge von etwa 0,5 Gew.-% bis etwa 5 Gew.-%, basierend auf dem Gesamtgewicht der Polymerzusammensetzung (25, 30, 35, 40, 45), vorhanden ist; wobei optional: das Schmiermittel aus einem oder mehreren von Wachsen, Paraffinen, Metallseifen, niedrig und hoch veresterten Estern, Amiden, Fettsäuren und Fettalkoholen ausgewählt ist, wobei optional das Schmiermittel aus einem Polyolefinwachs, beispielsweise Polyethylenwachs, ausgewählt ist.

13. Methode zum Herstellen einer Polymerzusammensetzung (25, 30, 35, 40, 45) nach einem der Ansprüche 1 bis 12, wobei die Methode das Kombinieren eines Polymers und eines Füllmaterials umfasst, wobei das Füllmaterial ein oberflächenbehandeltes Metalloxid umfasst und das oberflächenbehandelte Metalloxid in einer Menge von mindestens etwa 5 Vol.-% oder mindestens etwa 20 Vol.-%, basierend auf dem gesamten Trockenvolumen der Polymerzusammensetzung (25, 30, 35, 40, 45), vorhanden ist;
wobei die Methode **dadurch gekennzeichnet ist, dass** das Polymer Polyethylen hoher Dichte (HDPE) ist.

14. Geformter Gegenstand (1), der aus der Polymerzusammensetzung (25, 30, 35, 40, 45) nach einem der Ansprüche 1 bis 12 gebildet ist oder diese umfasst, wobei beispielsweise der geformte Gegenstand aus einem Radom, einer HF-Linse, einer Lüneburg-Linse, einem Retroreflektor, einem HF-Wellenleiter, einem HF-Filter, einem HF-Resonator, einer Metamaterialstruktur, einer Brechungsstruktur, einer Beugungsstruktur, einer Streustruktur ausgewählt ist oder einen Teil davon bildet.

## Revendications

1. Composition polymère (25, 30, 35, 40, 45) comprenant un polymère et un matériau de charge, dans laquelle le matériau de charge comprend un oxyde métallique traité en surface ;
dans laquelle l'oxyde métallique traité en surface est présent en une quantité d'au moins environ 5 % en volume, ou d'au moins environ 20 % en volume, sur la base du volume sec total de la composition polymère (25, 30, 35, 40, 45) ; et
la composition polymère (25, 30, 35, 40, 45) est **caractérisée en ce que** le polymère est du polyéthylène haute densité (PEHD).

2. Composition polymère (25, 30, 35, 40, 45) selon la revendication 1, dans laquelle l'oxyde métallique est traité en surface avec :
un silane ; ou
un ou plusieurs parmi : un sel métallique, un aluminate (par exemple, un zircoaluminate), un titanate (par exemple, un titanate de zirconate), un acide insaturé, un polymère fonctionnalisé acide.

3. Composition polymère (25, 30, 35, 40, 45) selon la revendication 1 ou 2, dans laquelle l'oxyde métallique comprend, ou est constitué de, ou est constitué essentiellement d'un ou plusieurs parmi l'oxyde de lithium, l'oxyde de sodium, l'oxyde de magnésium, l'oxyde de calcium, le dioxyde de titane, l'oxyde de vanadium, l'oxyde de fer, l'oxyde de nickel, l'oxyde de cuivre, l'oxyde de zinc, l'oxyde de gallium, l'oxyde de strontium, le dioxyde de zirconium, l'oxyde de niobium, le trioxyde de molybdène, l'oxyde de palladium, l'oxyde d'argent, l'oxyde de baryum, l'oxyde de tantale, l'oxyde de tungstène, l'oxyde de plomb, l'oxyde de bismuth, l'oxyde de lanthane, l'oxyde de cérium, l'oxyde de praséodyme, l'oxyde de néodyme, l'oxyde de samarium, l'oxyde de dysprosium, l'oxyde de thulium, l'oxyde d'yttrium, l'oxyde de manganèse, l'oxyde de germanium, l'oxyde d'aluminium, l'oxyde de chrome, l'oxyde de cobalt.

4. Composition polymère (25, 30, 35, 40, 45) selon l'une quelconque des revendications 1 à 3, dans laquelle l'oxyde métallique est du dioxyde de titane et éventuellement le dioxyde de titane est sous forme rutile.

5. Composition polymère (25, 30, 35, 40, 45) selon la revendication 1 ou 2, dans laquelle l'oxyde métallique comprend, est constitué de, ou est constitué essentiellement d'un ou plusieurs parmi un titanate métallique, un niobate métallique, un zirconate métallique, un tantalate métallique, un oxynitrure métallique.

6. Composition polymère (25, 30, 35, 40, 45) selon la revendication 1 ou 2, dans laquelle l'oxyde métallique comprend, est constitué de, ou est constitué essentiellement d'un titanate métallique, et le titanate métallique est choisi parmi un ou plusieurs parmi le titanate de bismuth, le titanate de baryum, le titanate de strontium, le titanate de cérium, le titanate de lanthane, le titanate de samarium, le titanate de tantale, le titanate de plomb, le titanate de zirconium, le titanate de calcium, le titanate de niobium, le titanate de baryum et de strontium, le titanate de calcium et de cuivre (par exemple CaCu₃Ti₄O₁₂).

7. Composition polymère (25, 30, 35, 40, 45) selon la revendication 1, 2 ou 6, dans laquelle l'oxyde métallique est le titanate de strontium.

8. Composition polymère (25, 30, 35, 40, 45) selon la revendication 1 ou 2, dans laquelle l'oxyde métallique comprend, est constitué de, ou est constitué essentiellement de :
un niobate de métal, et le niobate de métal est choisi parmi un ou plusieurs parmi le niobate de baryum, le niobate de bismuth et de zinc (par exemple, Bi _{1,5}Zn_{0,92}Nb_{1,5}O_{6,92}), le niobate de baryum et de titane et de galium (par exemple, BaTi_{0,7}Ga_{0,15}Nb_{0,15}O₃), le niobate d'argent et de tantale (par exemple, AgTa_{0,57}Nb_{0,43}O₃) ;
un zirconate métallique, et le zirconate métallique est choisi parmi un ou plusieurs parmi le zirconate de calcium (par exemple, Ca₂ZrO₄), le zirconate de plomb, le zirconate de plomb et de calcium (par exemple, Pb_{0,7}Ca_{0,3}ZrO₃) ;
un tantalate métallique, et le tantalate métallique est choisi parmi un ou plusieurs parmi le tantalate de baryum, de lanthane et de titane (par exemple, Ba₃La₃Ti₅Ta₆O₃₀), le tantalate d'argent (Ag_{0,52}Ta_{0,48}O₃) ; ou
un oxynitrure métallique, et l'oxynitrure métallique est choisi parmi l'oxynitrure de strontium et de tantale (SrTaO₂N).

9. Composition polymère (25, 30, 35, 40, 45) selon la revendication 1 ou 2, dans laquelle l'oxyde métallique est traité en surface avec :
un silane et dans lequel le silane est choisi parmi les méthacrylsilanes, par exemple, un triméthoxysilane fonctionnel méthacryloxy tel que le (gamma)-méthacryloxypropyltriméthoxysilane, les vinylsilanes, par exemple le vinyltriméthoxysilane, le vinyltriéthoxysilane, et les silanes organofonctionnels et les silanes non organoréactifs, par exemple les alkyèneoxydes silanes, les triméthoxysilanes ; ou
un sel métallique, un aluminate (par exemple un zircoaluminate), un titanate (par exemple un titanate de zirconate), un acide insaturé, un polymère fonctionnalisé acide.

10. Composition polymère (25, 30, 35, 40, 45) selon l'une quelconque des revendications précédentes, dans laquelle l'oxyde métallique est traité en surface en une quantité d'environ 0,5 % en poids à environ 10 % en poids, ou d'environ 0,7 % en poids à environ 5 % en poids, ou d'environ 0,9 % en poids à environ 2 % en poids, sur la base du poids de l'oxyde métallique traité en surface.

11. Composition polymère (25, 30, 35, 40, 45) selon l'une quelconque des revendications précédentes, dans laquelle l'oxyde métallique traité en surface est présent en une quantité d'au moins environ 30 % en volume, ou en une quantité d'au moins environ 40 % en volume, ou en une quantité d'au moins environ 50 % en volume sur la base du volume total de la composition polymère (25, 30, 35, 40, 45).

12. Composition polymère (25, 30, 35, 40, 45) selon l'une quelconque des revendications précédentes, dans laquelle la composition polymère (25, 30, 35, 40, 45) comprend également un lubrifiant, éventuellement dans laquelle le lubrifiant est présent en une quantité d'environ 0,5 % à environ 5 % en poids sur la base du poids total de la composition polymère (25, 30, 35, 40, 45) ; dans laquelle éventuellement : le lubrifiant est choisi parmi une ou plusieurs cires, paraffines, savons métalliques, esters à faible et haute estérification, amides, acides gras et alcools gras, éventuellement dans laquelle le lubrifiant est choisi parmi une cire de polyoléfine, par exemple une cire de polyéthylène.

13. Procédé de fabrication d'une composition polymère (25, 30, 35, 40, 45) selon l'une quelconque des revendications 1 à 12, dans lequel le procédé comprend la combinaison d'un polymère et d'un matériau de charge, dans lequel le matériau de charge comprend un oxyde métallique traité en surface et l'oxyde métallique traité en surface est présent en une quantité d'au moins environ 5 % en volume, ou d'au moins environ 20 % en volume, sur la base du volume sec total de la composition polymère (25, 30, 35, 40, 45) ;
dans lequel le procédé est **caractérisé en ce que** le polymère est du polyéthylène haute densité (PEHD).

14. Article façonné (1) formé à partir de ou comprenant la composition polymère (25, 30, 35, 40, 45) selon l'une quelconque des revendications 1 à 12, par exemple dans lequel l'article façonné est choisi parmi un radôme, une lentille RF, une lentille de Luneburg, un rétro-réflecteur, un guide d'ondes RF, un filtre RF, un résonateur RF, une structure de métamatériau, une structure de réfraction, une structure de diffraction, une structure de diffusion ou forme une partie de ceux-ci.
